# EUROPEAN PATENT APPLICATION

(11) **EP 4 044 689 A1**
(43) Date of publication of application: **17.08.2022**
(21) Application number: 20898692.7
(22) Date of filing: 11.12.2020
(51) Int. Cl.: H04W 48/20, H04W 4/24

(54) **SESSION MANAGEMENT NETWORK ELEMENT DISCOVERY METHOD, DEVICE AND SYSTEM**

(30) Priority: 11.12.2019 CN 201911269444
(71) Applicant: HUAWEI TECHNOLOGIES CO., LTD., Shenzhen, Guangdong 518129 (CN)
(72) Inventor: WANG, Yufang, Shenzhen, Guangdong 518129 (CN); LYU, Liming, Shenzhen, Guangdong 518129 (CN); HAO, Wenjie, Shenzhen, Guangdong 518129 (CN)
(74) Representative: MERH-IP Matias Erny Reichl Hoffmann Patentanwälte PartG mbB
(86) International application number: PCT/CN2020/135862
(87) International publication number: WO 2021/115447

(57) **Abstract**

Embodiments of this application relate to the communication field, and provide a session management network element discovery method, a device, and a system, to provide differentiated session management network element discovery policies for terminal devices that subscribe to different service packages with a same DNN. The method specifically includes: A network repository function network element receives a first identifier from a mobility management network element, where the first identifier is for identifying a home location of a terminal device. The network repository function network element determines a first session management network element based on the first identifier, where a home location identifier of the first session management network element is the same as the first identifier. The network repository function network element sends an identifier of the first session management network element to the mobility management network element. This application is used to discover a session management network element.

## Description

This application claims priority to Chinese Patent Application No. 201911269444.4, filed with the China National Intellectual Property Administration on December 11, 2019 and entitled "SESSION MANAGEMENT NETWORK ELEMENT DISCOVERY METHOD, DEVICE, AND SYSTEM", which is incorporated herein by reference in its entirety.

### TECHNICAL FIELD

This application relates to the communication field, and in particular, to a session management network element discovery method, a device, and a system.

### BACKGROUND

Currently, in a 5th generation (5th generation, 5G) network, some operators expect to use different session management function (session management function, SMF) network element discovery policies for different service packages with a same data network name (data network name, DNN) for operating and planning service packages. For example, a general package and a specific package of an enhanced mobile broadband (enhanced mobile broadband, eMBB) service have a same DNN (where the two packages are both eMBB services). However, in an inter-area access scenario, operators may expect a terminal device that subscribes to the general package of the eMBB service to select a visited SMF network element for services, but expect a terminal device that subscribes to the specific service package of the eMBB service to select a home SMF network element for services.

However, in a current technology, terminal devices that subscribe to different service packages with a same DNN use a same SMF network element discovery policy during session activation. Consequently, using the current technology cannot meet the service package deployment requirement of the operators.

### SUMMARY

Embodiments of this application provide a session management network element discovery method, a device, and a system, to provide differentiated session management network element discovery policies for terminal devices that subscribe to different service packages with a same DNN.

To achieve the foregoing objective, the following technical solutions are used in embodiments of this application.

According to a first aspect, a session management network element discovery method is provided. The method includes: A network repository function network element receives a first identifier from a mobility management network element, where the first identifier is for identifying a home location of a terminal device. The network repository function network element determines a first session management network element based on the first identifier, where a home location identifier of the first session management network element is the same as the first identifier. The network repository function network element sends an identifier of the first session management network element to the mobility management network element. In this embodiment of this application, the first identifier received by the network repository function network element is sent by the mobility management network element to the network repository function network element when the mobility management network element determines that a service package to which the terminal device subscribes is a preset service package. Alternatively, the first identifier received by the network repository function network element is sent by the mobility management network element to the network repository function network element when the mobility management network element determines that subscription information of the terminal device includes a home location identifier of the terminal device, and the subscription information of the terminal device includes the home location identifier of the terminal device only when a service package to which the terminal device subscribes is a preset service package. Therefore, when the network repository function network element receives the first identifier from the mobility management network element, it indicates that the service package to which the terminal device subscribes is the preset service package. In this case, the network repository function network element may determine the corresponding first session management network element for the terminal device through matching based on the first identifier that identifies the home location of the terminal device, and send the identifier of the first session management network element to the mobility management network element, so that different session management network element discovery policies can be provided for terminal devices that subscribe to different service packages with a same DNN. In other words, in this embodiment of this application, different session management network element discovery policies can be provided for the terminal device based on different service packages to which the terminal device subscribes. This avoids a current-technology problem that terminal devices that subscribe to different service packages with a same DNN use a same SMF network element discovery policy during session activation.

In a possible design, the first identifier is a home location identifier of a first unified data management network element, and the first unified data management network element is a unified data management network element to which the terminal device subscribes; or the first identifier is the home location identifier of the terminal device.

In a possible design, when the first identifier is the home location identifier of the first unified data management network element, the method further includes: The network repository function network element sends the home location identifier of the first unified data management network element to the mobility management network element.

In a possible design, that the network repository function network element sends the home location identifier of the first unified data management network element to the mobility management network element includes: The network repository function network element sends network function configuration information of the first unified data management network element to the mobility management network element, where the network function configuration information includes the home location identifier of the first unified data management network element. Based on this solution, the mobility management network element may obtain the home location identifier of the first unified data management network element based on the network function configuration information of the first unified data management network element.

In a possible design, the method further includes: The network repository function network element receives a first message from the first unified data management network element, where the first message carries the home location identifier of the first unified data management network element, and the first message is for registering the first unified data management network element with the network repository function network element. Based on this solution, the network repository function network element may obtain the home location identifier of the first unified data management network element by using the first message.

In a possible design, the method further includes: The network repository function network element receives a second message from the first session management network element, where the second message carries the home location identifier of the first session management network element, and the second message is for registering the first session management network element with the network repository function network element. Based on this solution, the network repository function network element may obtain the home location identifier of the first session management network element by using the second message.

In a possible design, the home location identifier of the first session management network element is included in network function configuration information of the first session management network element. Based on this solution, the home location identifier of the first session management network element may be obtained by using the network function configuration information of the first session management network element.

According to a second aspect, a session management network element discovery method is provided. The method includes: A first unified data management network element obtains subscription information of a terminal device, where the subscription information is for determining whether a service package to which the terminal device subscribes is a preset service package, and the first unified data management network element is a unified data management network element to which the terminal device subscribes. The first unified data management network element sends the subscription information to a mobility management network element. In this embodiment of this application, the first unified data management network element may obtain the subscription information of the terminal device, and send the subscription information of the terminal device to the mobility management network element. Therefore, the mobility management network element may receive the subscription information of the terminal device from the mobility management network element, and send a home location identifier of the first unified data management network element to a network repository function network element when determining, based on the subscription information of the terminal device, that the service package to which the terminal device subscribes is the preset service package. In this way, when receiving the home location identifier of the first unified data management network element from the mobility management network element, the network repository function network element may determine a corresponding first session management network element for the terminal device through matching based on the home location identifier of the first unified data management network element, and send an identifier of the first session management network element to the mobility management network element, so that different session management network element discovery policies are provided for terminal devices that subscribe to different service packages with a same DNN. In other words, in this embodiment of this application, different session management network element discovery policies can be provided for the terminal device based on different service packages to which the terminal device subscribes. This avoids a current-technology problem that terminal devices that subscribe to different service packages with a same DNN use a same SMF network element discovery policy during session activation.

In a possible design, the method further includes: The first unified data management network element sends a first message to the network repository function network element, where the first message carries the home location identifier of the unified data management network element, and the first message is for registering the unified data management network element with the network repository function network element. Based on this solution, the network repository function network element may obtain the home location identifier of the first unified data management network element by using the first message.

According to a third aspect, a session management network element discovery method is provided. The method includes: A mobility management network element receives a home location identifier of a first unified data management network element from a network repository function network element, where the first unified data management network element is a unified data management network element to which a terminal device subscribes. The mobility management network element receives subscription information of the terminal device from the first unified data management network element. When the mobility management network element determines, based on the subscription information, that a service package to which the terminal device subscribes is a preset service package, the mobility management network element sends the home location identifier of the first unified data management network element to the network repository function network element, where the home location identifier of the first unified data management network element is for determining a first session management network element, and the first session management network element and the first unified data management network element have a same home location identifier. The mobility management network element receives an identifier of the first session management network element from the network repository function network element. In this embodiment of this application, the mobility management network element may receive the home location identifier of the first unified data management network element from the network repository function network element and the subscription information of the terminal device from the first unified data management network element, and send the home location identifier of the first unified data management network element to the network repository function network element when determining, based on the subscription information of the terminal device, that the service package to which the terminal device subscribes is the preset service package. Therefore, the network repository function network element may receive the home location identifier of the first unified data management network element from the mobility management network element, determine the corresponding first session management network element for the terminal device through matching based on the home location identifier of the first unified data management network element, and send the identifier of the first session management network element to the mobility management network element, so that different session management network element discovery policies are provided for terminal devices that subscribe to different service packages with a same DNN. In other words, in this embodiment of this application, different session management network element discovery policies can be provided for the terminal device based on different service packages to which the terminal device subscribes. This avoids a current-technology problem that terminal devices that subscribe to different service packages with a same DNN use a same SMF network element discovery policy during session activation.

In a possible design, that a mobility management network element receives a home location identifier of a first unified data management network element from a network repository function network element includes: The mobility management network element receives network function configuration information of the first unified data management network element from the network repository function network element, where the network function configuration information includes the home location identifier of the first unified data management network element. Based on this solution, the mobility management network element may obtain the home location identifier of the first unified data management network element by using the network function configuration information of the first unified data management network element.

According to a fourth aspect, a session management network element discovery method is provided. The method includes: A first unified data management network element obtains subscription information of a terminal device, where the first unified data management network element is a data management network element to which the terminal device subscribes; and when a service package to which the terminal device subscribes is a preset service package, the subscription information of the terminal device includes a home location identifier of the terminal device, where the home location identifier of the terminal device is for determining a first session management network element, and the first session management network element and the terminal device have a same home location identifier. The first unified data management network element sends the subscription information to a mobility management network element. In this embodiment of this application, the first unified data management network element may obtain the subscription information of the terminal device, and send the subscription information of the terminal device to the mobility management network element. When the service package to which the terminal device subscribes is the preset service package, the subscription information of the terminal device includes the home location identifier of the terminal device. Therefore, when the mobility management network element determines that the received subscription information of the terminal device includes the home location identifier of the terminal device, it indicates that the service package to which the terminal device subscribes is the preset service package. In this case, the mobility management network element may send the home location identifier of the terminal device to a network repository function network element. Further, when receiving the home location identifier of the terminal device from the mobility management network element, the network repository function network element may determine the corresponding first session management network element for the terminal device through matching based on the home location identifier of the terminal device, and send an identifier of the first session management network element to the mobility management network element, so that different session management network element discovery policies are provided for terminal devices that subscribe to different service packages with a same DNN. In other words, in this embodiment of this application, different session management network element discovery policies can be provided for the terminal device based on different service packages to which the terminal device subscribes. This avoids a current-technology problem that terminal devices that subscribe to different service packages with a same DNN use a same SMF network element discovery policy during session activation.

According to a fifth aspect, a session management network element discovery method is provided. The method includes: A mobility management network element receives subscription information of a terminal device from a first unified data management network element, where the first unified data management network element is a data management network element to which the terminal device subscribes. When the mobility management network element determines that the subscription information includes a home location identifier of the terminal device, the mobility management network element sends the home location identifier of the terminal device to a network repository function network element, where the home location identifier of the terminal device is for determining a first session management network element, and the first session management network element and the unified data management network element have a same home location identifier. The mobility management network element receives an identifier of the first session management network element from the network repository function network element. In this embodiment of this application, the mobility management network element may receive the subscription information of the terminal device from the first unified data management network element, and when a service package to which the terminal device subscribes is a preset service package, the subscription information of the terminal device includes the home location identifier of the terminal device. Therefore, when the mobility management network element determines that the subscription information includes the home location identifier of the terminal device, it indicates that the service package to which the terminal device subscribes is the preset service package. In this case, the mobility management network element sends the home location identifier of the terminal device to the network repository function network element. Further, the network repository function network element may receive the home location identifier of the terminal device from the mobility management network element, determine the corresponding first session management network element for the terminal device through matching based on the home location identifier of the terminal device, and send the identifier of the first session management network element to the mobility management network element, so that different session management network element discovery policies are provided for terminal devices that subscribe to different service packages with a same DNN. In other words, in this embodiment of this application, different session management network element discovery policies can be provided for the terminal device based on different service packages to which the terminal device subscribes. This avoids a current-technology problem that terminal devices that subscribe to different service packages with a same DNN use a same SMF network element discovery policy during session activation.

According to a sixth aspect, a communication apparatus is provided, to implement the foregoing methods. The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

According to a seventh aspect, a communication apparatus is provided. The apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor implements the method according to any one of the foregoing aspects by using a logic circuit or executing code instructions.

In a possible design, the communication apparatus further includes a memory. The memory is configured to store computer instructions. When the processor executes the instructions, the communication apparatus is enabled to perform the method according to any one of the foregoing aspects.

According to an eighth aspect, a communication apparatus is provided. The communication apparatus includes a processor. The processor is configured to: after being coupled to a memory and reading instructions in the memory, perform, according to the instructions, the method according to any one of the foregoing aspects.

In a possible design, the communication apparatus further includes the memory, and the memory is configured to store necessary program instructions and data. When the communication apparatus is a chip system, the communication apparatus may include a chip, or may include a chip and another discrete component.

With reference to the sixth aspect, the seventh aspect, or the eighth aspect, in a possible design, the communication apparatus may be the network repository function network element in the first aspect, a chip or a chip system that may be used in the network repository function network element in the first aspect, or an apparatus including the network repository function network element. Alternatively, the communication apparatus may be the first unified data management network element in the second aspect or the fourth aspect, a chip or a chip system that may be used in the first unified data management network element in the second aspect or the fourth aspect, or an apparatus including the first unified data management network element. Alternatively, the communication apparatus may be the mobility management network element in the third aspect or the fifth aspect, a chip or a chip system that may be used in the mobility management network element in the third aspect or the fifth aspect, or an apparatus including the mobility management network element.

According to a ninth aspect, a computer-readable storage medium is provided. The computer-readable storage medium stores instructions. When the instructions are run on a computer, the computer is enabled to perform the method according to any one of the foregoing aspects.

According to a tenth aspect, a computer program product including instructions is provided. When the computer program product runs on a computer, the computer is enabled to perform the method according to any one of the foregoing aspects.

According to an eleventh aspect, a communication system is provided. The communication system includes the network repository function network element in the first aspect, the first unified data management network element in the second aspect, and the mobility management network element in the third aspect. Alternatively, the communication system includes the network repository function network element in the first aspect, the first unified data management network element in the fourth aspect, and the mobility management network element in the fifth aspect.

For technical effects brought by any design in the sixth aspect to the eleventh aspect, refer to technical effects brought by different designs in the first aspect, the second aspect, the third aspect, the fourth aspect, or the fifth aspect. Details are not described herein again.

### BRIEF DESCRIPTION OF DRAWINGS

FIG. 1 is a schematic diagram of a network architecture according to an embodiment of this application;
FIG. 2 is a schematic diagram of a 5G network architecture according to an embodiment of this application;
FIG. 3 is a schematic diagram of a structure of a communication system according to an embodiment of this application;
FIG. 4 is a schematic diagram of a structure of a communication device according to an embodiment of this application;
FIG. 5A and FIG. 5B are a schematic flowchart of a session management network element discovery method according to an embodiment of this application;
FIG. 6A and FIG. 6B are a schematic flowchart of another session management network element discovery method according to an embodiment of this application;
FIG. 7 is a schematic diagram of a structure of a network repository function network element according to an embodiment of this application;
FIG. 8 is a schematic diagram of a structure of a first unified data management network element according to an embodiment of this application; and
FIG. 9 is a schematic diagram of a structure of a mobility management network element according to an embodiment of this application.

### DETAILED DESCRIPTION OF EMBODIMENTS

The following describes technical solutions in embodiments of this application with reference to the accompanying drawings in embodiments of this application. In descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically same functions and purposes. A person skilled in the art may understand that the terms such as "first" and "second" do not limit a quantity and an execution sequence, and the terms such as "first" and "second" do not indicate a definite difference. In addition, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a relative concept in a specific manner for ease of understanding.

In addition, in embodiments of this application, each network element or terminal device belongs to only one administrative management area. A "home location" is used to represent an administrative management area to which the network element or the terminal device belongs, and a "home location identifier" is used to identify a home location of the network element or the terminal device.

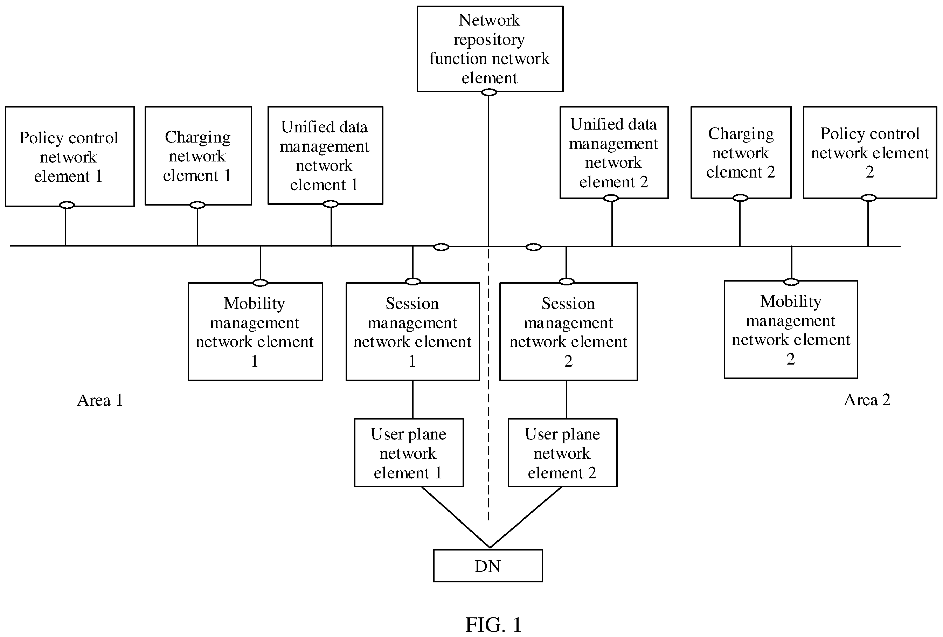

FIG. 1 is a schematic diagram of a possible network architecture to which an embodiment of this application is applicable. The network architecture may include one or more of a mobility management network element, a unified data management network element, a policy control network element, a charging network element, a session management network element, a user plane network element, or a network repository function network element. The network repository function network element centrally manages a plurality of administrative management areas including an area 1 and an area 2. The area 1 and the area 2 are two different administrative management areas, and are located in a same data network (data network, DN). The area 1 includes one or more of a mobility management network element 1, a user plane network element 1, a session management network element 1, a unified data management network element 1, a policy control network element 1, or a charging network element 1. The area 2 includes one or more of a mobility management network element 2, a policy control network element 2, a charging network element 2, a unified data management network element 2, a session management network element 2, or a user plane network element 2. The network elements in the area 1 have a same home location identifier, indicating that the network elements belong to the area 1. The network elements in the area 2 have a same home location identifier, indicating that the network elements belong to the area 2. The area 1 and the area 2 have different home location identifiers. The user plane network element 1 in the area 1 and the user plane network element 2 in the area 2 are connected to a same DN.

The mobility management network element is mainly used for mobility management in a mobile network, for example, user location update, user network registration, and user handover. The unified data management network element is used for user identifier processing, access authentication, registration, mobility management, or the like. The network repository function network element is used for service discovery, maintenance of configurations and services of network functions, and the like. The policy control network element is configured to support a unified policy framework to govern network behavior, provide policy rule information for a control plane function network element, and so on. The charging network element is configured to provide a charging service for an authorized network function network element, support network access authentication on UE, perform quota authorization, and so on. The session management network element is mainly configured to interact with a separated data plane, create, update, and delete protocol data unit (protocol data unit, PDU) sessions, manage a session context (session context) with the user plane network element, and so on. The user plane network element is used as an anchor point for intra-radio access technology (radio access technology, RAT) or inter-RAT mobility and an external PDU session point of interconnection to the data network. In addition, the user plane network element is further used for packet routing and forwarding, data packet inspection, user plane part of policy rule enforcement (for example, gating, redirection, and traffic steering), lawful interception, and the like.

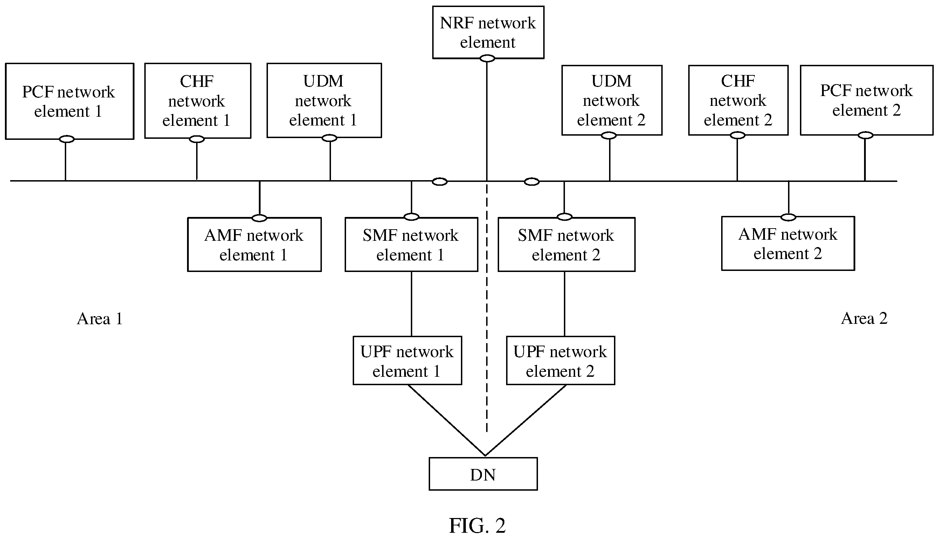

A 5G communication system is used as an example. The mobility management network element may be specifically an access and mobility management function (access and mobility management function, AMF) network element in the 5G communication system. The unified data management network element may be specifically a unified data management (unified data management, UDM) network element in the 5G communication system. The network repository function network element may be specifically a network repository function (network repository function, NRF) network element in the 5G communication system. The session management network element may be specifically a session management function (session management function, SMF) network element in the 5G communication system. The policy control network element may be specifically a policy control function (policy control function, PCF) network element in the 5G communication system. The charging network element may be specifically a charging function (charging function, CHF) network element in the 5G communication system. The user plane network element may be specifically a user plane function (user plane function, UPF) network element in the 5G communication system. In other words, in the 5G communication system, the network architecture shown in FIG. 1 is specifically a network architecture shown in FIG. 2.

In future communication, for example, 6th generation (6th generation, 6G) communication, the network element in the network architecture shown in FIG. 1 may still use the name of the network element in the 5G communication system, or may have another name. This is not limited in embodiments of this application.

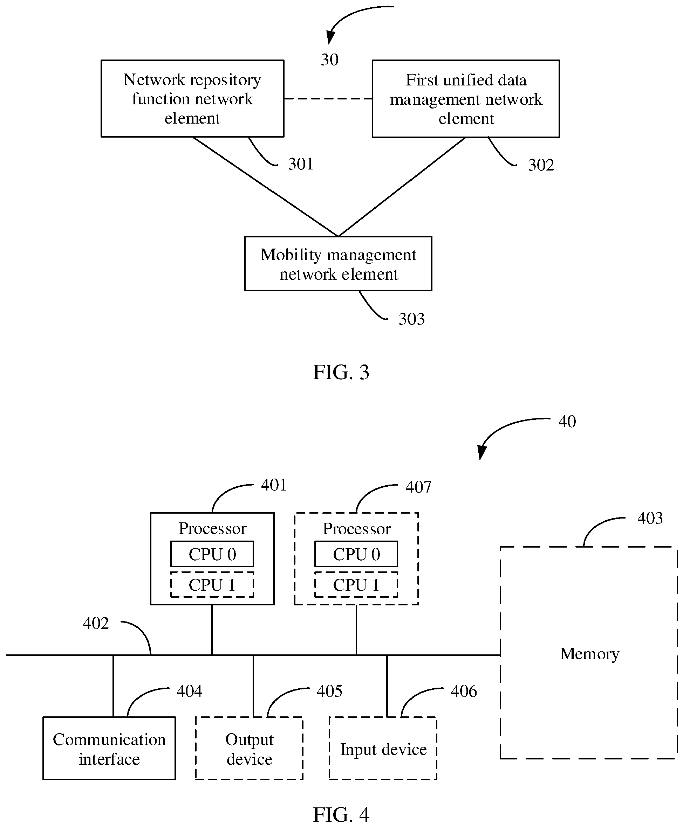

Based on the network architecture shown in FIG. 1, an embodiment of this application provides a communication system 30. As shown in FIG. 3, the communication system 30 provided in this embodiment of this application includes a network repository function network element 301, a first unified data management network element 302 to which a terminal device subscribes, and a mobility management network element 303 accessed by the terminal device. A network element or an entity corresponding to the network repository function network element 301 may be the network repository function network element in the network architecture shown in FIG. 1, and a network element or an entity corresponding to the first unified data management network element 302 may be the unified data management network element 1 or the unified data management network element 2 in the network architecture shown in FIG. 1. When the first unified data management network element is the unified data management network element 1, the mobility management network element 303 may be the mobility management network element 1 in the network architecture shown in FIG. 1, or may be the mobility management network element 2 in the network architecture shown in FIG. 1. Alternatively, when the first unified data management network element is the unified data management network element 2, the mobility management network element 303 may be the mobility management network element 1 in the network architecture shown in FIG. 1, or may be the mobility management network element 2 in the network architecture shown in FIG. 1. Any two of the network repository function network element 301, the first unified data management network element 302, and the mobility management network element 303 may directly communicate with each other, or may communicate with each other through forwarding by another device. This is not specifically limited in this embodiment of this application.

The network repository function network element 301 is configured to: receive a first identifier from the mobility management network element 303, and send an identifier of a first session management network element to the mobility management network element 303 after determining the first session management network element based on the first identifier. The first identifier is for identifying a home location of the terminal device, and a home location identifier of the first session management network element is the same as the first identifier.

In an optional implementation, the first identifier is a home location identifier of the first unified data management network element 302. The network repository function network element 301 is further configured to send the home location identifier of the first unified data management network element 302 to the mobility management network element 303. The first unified data management network element 302 is configured to: obtain subscription information of the terminal device, and send the subscription information to the mobility management network element 303, where the subscription information is for determining whether a service package to which the terminal device subscribes is a preset service package. The mobility management network element 303 is configured to: receive the home location identifier of the first unified data management network element 302 from the network repository function network element 301 and the subscription information of the terminal device from the first unified data management network element 302, and send the home location identifier of the first unified data management network element 302 to the network repository function network element 301 when determining, based on the subscription information of the terminal device, that the service package to which the terminal device subscribes is the preset service package. The mobility management network element 303 is further configured to receive the identifier of the first session management network element from the network repository function network element 301.

Alternatively, in another optional implementation, the first identifier is a home location identifier of the terminal device. The first unified data management network element 302 obtains subscription information of the terminal device, and sends the subscription information of the terminal device to the mobility management network element 303. When a service package to which the terminal device subscribes is a preset service package, the subscription information of the terminal device includes the home location identifier of the terminal device. The mobility management network element 303 is configured to: receive the subscription information of the terminal device from the first unified data management network element, and send the home location identifier of the terminal device to the network repository function network element 301 when determining that the subscription information includes the home location identifier of the terminal device. The mobility management network element 303 is further configured to receive the identifier of the first session management network element from the network repository function network element 301.

In this embodiment of this application, the first unified data management network element 302 may obtain the subscription information of the terminal device, and send the subscription information of the terminal device to the mobility management network element 303. Therefore, the mobility management network element 303 may receive the subscription information of the terminal device from the mobility management network element 303, and send the home location identifier of the first unified data management network element 302 to the network repository function network element 301 when determining, based on the subscription information of the terminal device, that the service package to which the terminal device subscribes is the preset service package. In this way, when the network repository function network element 301 receives the home location identifier of the first unified data management network element 302 from the mobility management network element 303, it indicates that the service package to which the terminal device subscribes is the preset service package. In this case, the network repository function network element 301 may determine the corresponding first session management network element for the terminal device through matching based on the home location identifier of the first unified data management network element 302, and send the identifier of the first session management network element to the mobility management network element 303, so that different session management network element discovery policies can be provided for terminal devices that subscribe to different service packages with a same DNN.

Alternatively, in this embodiment of this application, the first unified data management network element 302 may obtain the subscription information of the terminal device, and send the subscription information of the terminal device to the mobility management network element 303. When the service package to which the terminal device subscribes is the preset service package, the subscription information of the terminal device includes the home location identifier of the terminal device. Therefore, when the mobility management network element 303 determines that the received subscription information of the terminal device includes the home location identifier of the terminal device, it indicates that the service package to which the terminal device subscribes is the preset service package. In this case, the mobility management network element 303 may send the home location identifier of the terminal device to the network repository function network element 301. Further, when receiving the home location identifier of the terminal device from the mobility management network element 303, the network repository function network element 301 may determine the corresponding first session management network element for the terminal device through matching based on the home location identifier of the terminal device, and send the identifier of the first session management network element to the mobility management network element 303, so that different session management network element discovery policies are provided for terminal devices that subscribe to different service packages with a same DNN.

In other words, in this embodiment of this application, different session management network element discovery policies can be provided for the terminal device based on different service packages to which the terminal device subscribes. This avoids a current-technology problem that terminal devices that subscribe to different service packages with a same DNN use a same SMF network element discovery policy during session activation.

The communication system 30 shown in FIG. 3 may be applied to a current 5G network, or another future network, for example, a 6G network. This is not specifically limited in this embodiment of this application.

For example, it is assumed that the communication system shown in FIG. 3 is applied to the current 5G network. In this case, as shown in FIG. 2, a network element or an entity corresponding to the network repository function network element may be an NRF network element in the 5G network architecture shown in FIG. 2, a network element or an entity corresponding to the first unified data management network element may be a UDM network element 1 or a UDM network element 2 in the 5G network architecture shown in FIG. 2, and a network element or an entity corresponding to the mobility management network element may be an AMF network element 1 or an AMF network element 2 in the 5G network architecture shown in FIG. 2.

Optionally, in this embodiment of this application, a related function of the network repository function network element, the first unified data management network element, or the mobility management network element may be implemented by one device, may be jointly implemented by a plurality of devices, or may be implemented by one or more function modules in one device. This is not specifically limited in this embodiment of this application. It may be understood that the foregoing function may be a network element in a hardware device, a software function running on dedicated hardware, a combination of hardware and software, or a virtualized function instantiated on a platform (for example, a cloud platform).

For example, in this embodiment of this application, the related function of the network repository function network element, the first unified data management network element, or the mobility management network element may be implemented by a communication apparatus 40 in FIG. 4. FIG. 4 is a schematic diagram of a structure of the communication apparatus 40 according to an embodiment of this application. The communication apparatus 40 includes one or more processors 401, a communication line 402, and at least one communication interface (where in FIG. 4, an example in which a communication interface 404 and one processor 401 are included is merely used for description), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path for connecting different components.

The communication interface 404 may be a transceiver module, configured to communicate with another device or a communication network, for example, the Ethernet, a RAN, or a wireless local area network (wireless local area network, WLAN). For example, the transceiver module may be an apparatus such as a transceiver or a transceiver. Optionally, the communication interface 404 may alternatively be a transceiver circuit located in the processor 401, and is configured to implement signal input and signal output of the processor.

The memory 403 may be an apparatus having a storage function. For example, the memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer. However, the memory 403 is not limited thereto. The memory may exist independently, and is connected to the processor through the communication line 402. Alternatively, the memory may be integrated with the processor.

The memory 403 is configured to store computer-executable instructions for performing the solutions in this application, and the processor 401 controls execution. The processor 401 is configured to execute the computer-executable instructions stored in the memory 403, to implement a session management network element discovery method provided in embodiments of this application.

Alternatively, in this embodiment of this application, the processor 401 may perform processing-related functions in the session management network element discovery method provided in the following embodiments of this application, and the communication interface 404 is responsible for communicating with another device or a communication network. This is not specifically limited in this embodiment of this application.

The computer-executable instructions in this embodiment of this application may also be referred to as application program code. This is not specifically limited in this embodiment of this application.

During specific implementation, in an embodiment, the processor may include one or more CPUs such as a CPU 0 and a CPU 1 in FIG. 4.

During specific implementation, in an embodiment, the communication apparatus 40 may include a plurality of processors, for example, the processor 401 and a processor 407 in FIG. 4. Each of these processors may be a single-core (single-CPU) processor or a multi-core (multi-CPU) processor. The processor herein may refer to one or more devices, circuits, and/or processing cores configured to process data (for example, computer program instructions).

During specific implementation, in an embodiment, the communication apparatus 40 may further include an output device 405 and an input device 406. The output device 405 communicates with the processor 401, and may display information in a plurality of manners.

The following describes in detail a session management network element discovery method provided in embodiments of this application with reference to FIG. 1 to FIG. 4.

It should be noted that, in the following embodiments of this application, a name of a message between network elements, a name of each parameter in the message, or the like is merely an example, and may also be another name during specific implementation. This is not specifically limited in embodiments of this application.

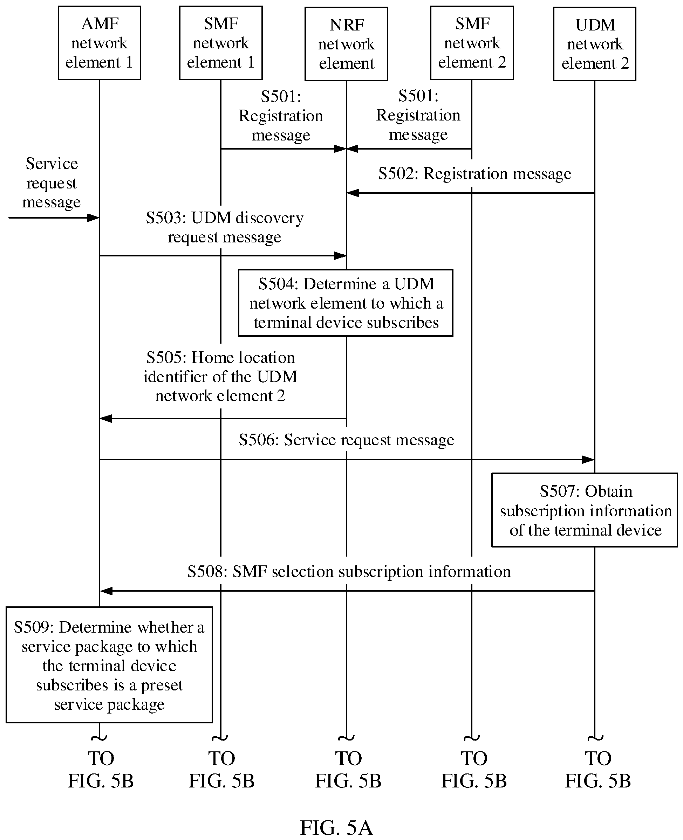

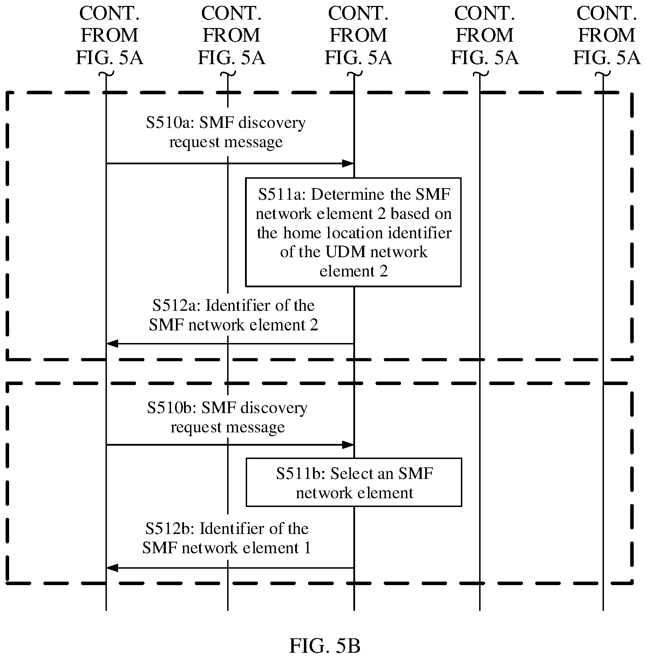

An example in which the communication system shown in FIG. 3 is applied to the 5G network architecture shown in FIG. 2, the network repository function network element is the NRF network element, the first unified data management network element is the UDM network element 2, and the mobility management network element is the AMF network element 1 is used. FIG. 5A and FIG. 5B show a session management network element discovery method according to an embodiment of this application. The method includes the following steps.

S501: SMF network elements each send a registration message to the NRF network element, and the NRF network element receives the registration message from the SMF network elements.

The SMF network elements include the SMF network element 1 and the SMF network element 2, and the registration message is also referred to as a second message. The registration message carries a home location identifier of the SMF network element, and the registration message is for registering the SMF network element with the NRF network element.

In an optional implementation, the home location identifier of the SMF network element may be specifically included in network function configuration information (NF profile) of the SMF network element. In other words, the SMF network element may include the home location identifier of the SMF network element in the network function configuration information of the SMF network element, and send the home location identifier of the SMF network element to the NRF network element by including the network function configuration information of the SMF network element in the registration message. Further, after receiving the registration message, the NRF network element may store the network function configuration information of the SMF network element, and therefore determine the home location identifier of the SMF network element, an identifier of the SMF network element, and other related information of the SMF network element based on the network function configuration information of the SMF network element.

For example, the home location identifier of the SMF network element may be configured in a reserved field in existing network function configuration information. Alternatively, the home location identifier of the SMF network element may be defined by extending an optional attribute in the NF profile. For example, a form shown in Table 1 is used to extend the optional attribute in the NF profile, to identify a home location of the SMF network element. In Table 1, an attribute name (x-servingScope) option is for indicating a name of an attribute; a data type option is for indicating a data type of the attribute, for example, may be an array (array) of a string (string) type; an optional/mandatory attribute option is for indicating whether the attribute is an optional attribute or a mandatory attribute; a cardinality option is for indicating a specific value of the attribute (where different values indicate different home locations); a description option is for describing a function of the attribute.

**Table 1**

| Attribute name (attribute name) | Data type (data type) | Optional/Mandatory attribute | Cardinality (cardinality) | Description (description) |
|---|---|---|---|---|
| x-servingScope | Array (string) | Optional attribute | 0, 1, ..., and N | Home location identifier of the SMF network element |

S502: The UDM network element 2 sends a registration message to the NRF network element, and the NRF network element receives the registration message from the UDM network element 2.

The registration message may also be referred to as a first message, the registration message carries a home location identifier of the UDM network element 2, and the registration message is for registering the UDM network element 2 with the NRF network element.

In an optional implementation, the home location identifier of the UDM network element 2 may be specifically included in network function configuration information of the UDM network element 2. Operations of the UDM network element 2 are similar to those of the SMF network element. The UDM network element 2 may also include the home location identifier of the UDM network element 2 in the network function configuration information of the UDM network element 2, and send the home location identifier of the UDM network element 2 to the NRF network element by including the network function configuration information of the UDM network element 2 in the registration message. Further, after receiving the registration message, the NRF network element may store the network function configuration information of the UDM network element 2, and therefore determine the home location identifier of the UDM network element 2, an identifier of the UDM network element 2, and other related information of the UDM network element 2 based on the network function configuration information of the UDM network element 2.

Further, when the AMF network element 1 receives a service request message sent by a terminal device, the session management network element discovery method provided in this embodiment of this application may further include the following steps S503 to S509 shown in FIG. 5A and FIG. 5B.

S503: The AMF network element 1 sends a UDM discovery request message to the NRF network element, and the NRF network element receives the UDM discovery request message from the AMF network element 1. The UDM discovery request message carries a user identifier of the terminal device.

The user identifier of the terminal device is for identifying the terminal device. For example, the user identifier may be a subscription permanent identifier (subscription permanent identifier, SUPI) of the terminal device. This is not specifically limited in this embodiment of this application.

S504: The NRF network element determines a UDM network element (namely, the UDM network element 2 in this embodiment of this application) to which the terminal device subscribes.

For example, the NRF network element may determine, based on the user identifier of the terminal device, for example, the SUPI of the terminal device, the UDM network element to which the terminal device subscribes. This is not specifically limited in this embodiment of this application.

S505: The NRF network element sends the home location identifier of the UDM network element 2 to the AMF network element 1, and the AMF network element 1 receives the home location identifier of the UDM network element 2 from the NRF network element.

In an optional implementation, if in the foregoing step S502, the home location identifier of the UDM network element 2 is included in the network function configuration information of the UDM network element 2, step S505 may specifically include: The NRF network element may send the network function configuration information of the UDM network element 2 to the AMF network element 1, and the AMF network element 1 receives the network function configuration information of the UDM network element 2 from the NRF network element. In this way, the AMF network element 1 may obtain the home location identifier of the UDM network element 2 by reading a corresponding field in the received network function configuration information of the UDM network element 2.

S506: The AMF network element 1 sends a service request message to the UDM network element 2, and the UDM network element 2 receives the service request message from the AMF network element 1. The service request message is for requesting to obtain SMF selection subscription information (SMF selection subscription data).

S507: The UDM network element 2 obtains subscription information of the terminal device.

S508: The UDM network element 2 sends the SMF selection subscription information to the AMF network element 1, and the AMF network element 1 receives the SMF selection subscription information from the UDM network element 2. The SMF selection subscription information includes the subscription information of the terminal device.

It should be noted that, in an existing protocol, the SMF selection subscription information does not include the subscription information of the terminal device. In this embodiment of this application, the SMF selection subscription information is extended, so that the SMF selection subscription information includes the subscription information of the terminal device. In this way, after receiving the SMF selection subscription information, the AMF network element 1 may determine, based on the subscription information of the terminal device in the SMF selection subscription information, whether a service package to which the terminal device subscribes is a preset service package (that is, step S509).

S509: The AMF network element 1 determines whether the service package to which the terminal device subscribes is the preset service package.

The AMF network element 1 may determine, based on the subscription information of the terminal device that is included in the SMF selection subscription information, whether the service package to which the terminal device subscribes is the preset service package. The preset service package is a specific preset service package for which a home SMF network element needs to be discovered, for example, a specific package of an eMBB service. Certainly, during actual application, the preset service package may be determined based on a specific deployment requirement of an operator service package. This is not specifically limited in this embodiment of this application.

In a possible implementation, because charging characteristics (charging characteristic) in subscription information corresponding to different service packages are different, the AMF network element 1 may determine, based on a charging characteristic in the subscription information of the terminal device, whether the service package to which the terminal device subscribes is the preset service package. This is not specifically limited in this embodiment of this application.

In an optional implementation, when the AMF network element 1 determines that the service package to which the terminal device subscribes is the preset service package, the session management network element discovery method provided in this embodiment of this application may further include the following steps S510a to S512a shown in FIG. 5A and FIG. 5B.

S510a: The AMF network element 1 sends an SMF discovery request message to the NRF network element, and the NRF network element receives the SMF discovery request message from the AMF network element 1.

The SMF discovery request message carries the home location identifier of the UDM network element 2.

S511a: The NRF network element determines the SMF network element 2 based on the home location identifier of the UDM network element 2.

Certainly, in this embodiment of this application, the SMF discovery request message in step S511a further carries a standard SMF discovery parameter, for example, a DNN, single network slice selection assistance information (single network slice selection assistance information, S-NSSAI), or a tracking area identity (tracking area identity, TAI). The NRF network element uses the standard SMF discovery parameter as an optional parameter, and uses the home location identifier of the UDM network element 2 as a mandatory parameter, to determine a corresponding SMF network element for the terminal device through matching. This is not specifically limited in this embodiment of this application.

The SMF network element 2 is also referred to as a first session management network element, and a home location identifier of the SMF network element 2 is the same as the home location identifier of the UDM network element 2. Because both the SMF network element 2 and the UDM network element 2 belong to an area 2, the SMF network element 2 and the UDM network element 2 have a same home location identifier. In this way, when determining the SMF network element for the terminal device through matching based on the home location identifier of the UDM network element 2, the NRF network element may determine the SMF network element 2 in the area 2 through matching.

S512a: The NRF network element sends an identifier of the SMF network element 2 to the AMF network element 1, and the AMF network element 1 receives the identifier of the SMF network element 2 from the NRF network element.

Further, the AMF network element 1 may initiate a session establishment procedure through the SMF network element 2 based on the received identifier of the SMF network element 2, to provide a service for the terminal device.

Alternatively, in another optional implementation, when the AMF network element 1 determines that the service package to which the terminal device subscribes is not the preset service package, the session management network element discovery method provided in this embodiment of this application may further include the following steps S510b to S512b shown in FIG. 5A and FIG. 5B.

S510b: The AMF network element 1 sends an SMF discovery request message to the NRF network element, and the NRF network element receives the SMF discovery request message from the AMF network element 1.

The SMF discovery request message carries a standard SMF discovery parameter, for example, a DNN, S-NSSAI, or a TAI. This is not specifically limited in this embodiment of this application.

S511b: The NRF network element selects an SMF network element for the terminal device.

The NRF network element may select the SMF network element for the terminal device based on the standard SMF discovery parameter. Further, because the NRF network element performs selection based on the standard SMF discovery parameter, the NRF network element selects the SMF network element 1 in an area 1 for the terminal device through matching.

S512b: The NRF network element sends an identifier of the SMF network element 1 to the AMF network element 1, and the AMF network element 1 receives the identifier of the SMF network element 1 from the NRF network element.

Further, the AMF network element 1 may initiate a session establishment procedure through the SMF network element 1 based on the received identifier of the SMF network element 1, to provide a service for the terminal device.

For specific implementation of steps S510b to S512b, refer to a current technology. Details are not described herein.

In this embodiment of this application, the UDM network element 2 may obtain the subscription information of the terminal device, and send the subscription information of the terminal device to the AMF network element 1. Therefore, the AMF network element 1 may receive the subscription information of the terminal device from the AMF network element 1, and send the home location identifier of the UDM network element 2 to the NRF network element when determining, based on the subscription information of the terminal device, that the service package to which the terminal device subscribes is the preset service package. In this way, when the NRF network element receives the home location identifier of the UDM network element 2 from the AMF network element 1, it indicates that the service package to which the terminal device subscribes is the preset service package. In this case, the NRF network element may determine the corresponding SMF network element for the terminal device through matching based on the home location identifier of the UDM network element 2, and send an identifier of the determined SMF network element to the AMF network element 1, so that different session management network element discovery policies can be provided for terminal devices that subscribe to different service packages with a same DNN. This avoids a current-technology problem that terminal devices that subscribe to different service packages with a same DNN use a same SMF network element discovery policy during session activation.

In addition, it should be noted that, because the subscription information of the terminal device does not change in this embodiment of this application, when the solution in this embodiment of this application is used, the original subscription information may be retained, and user subscription does not need to be performed again. For example, when a 5G network is established based on a 4th generation (4th generation, 4G) network, a service package of the 4G network may continue to be used, and a user does not need to re-subscribe to a new service package.

The actions of the NRF network element, the actions of the UDM network element 2, or the actions of the SMF network element 2 in the foregoing steps S501 to S512a or steps S501 to S512b may be performed by the processor 401 in the communication device 400 shown in FIG. 4 by invoking the application program code stored in the memory 403. This is not limited in this embodiment.

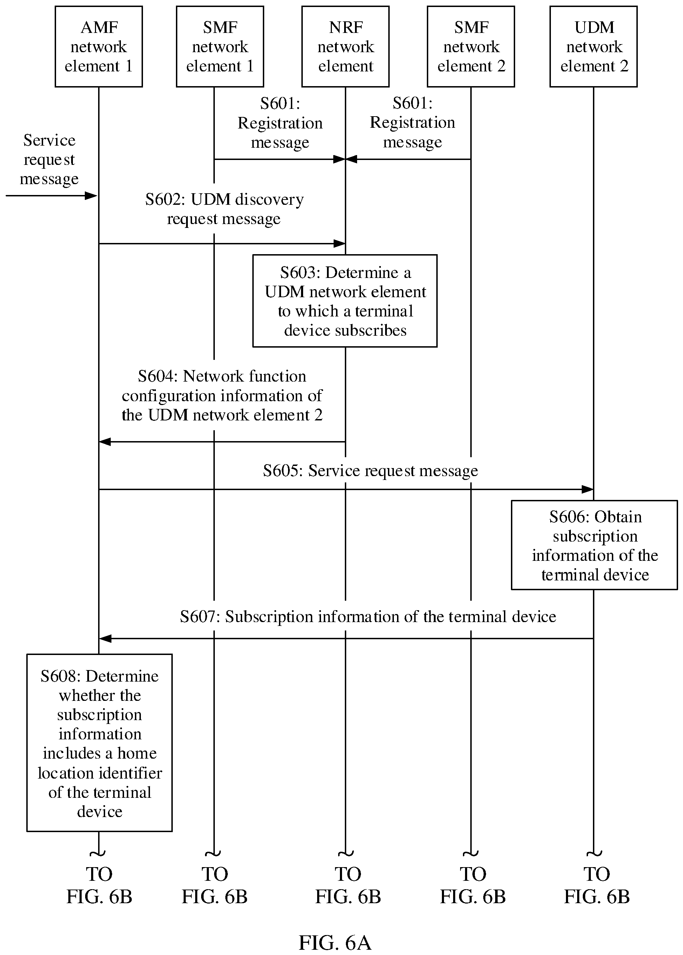

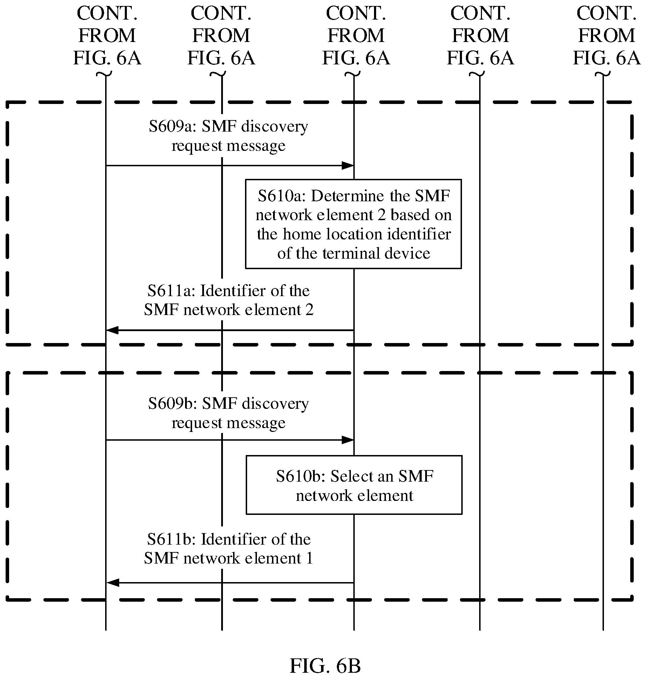

Alternatively, an example in which the communication system shown in FIG. 3 is applied to the 5G network architecture shown in FIG. 2, the network repository function network element is the NRF network element, the first unified data management network element is the UDM network element 2, and the mobility management network element is the AMF network element 1 is used. FIG. 6A and FIG. 6B show another session management network element discovery method according to an embodiment of this application. The method includes the following steps.

S601 is the same as step S501. For related descriptions, refer to the embodiment shown in FIG. 5A and FIG. 5B. Details are not described herein again.

S602 and S603 are the same as steps S503 and S504. For related descriptions, refer to the embodiment shown in FIG. 5A and FIG. 5B. Details are not described herein again.

S604: The NRF network element sends the network function configuration information of the UDM network element 2 to the AMF network element 1, and the AMF network element 1 receives the network function configuration information of the UDM network element 2 from the NRF network element.

It should be noted that, a difference from the embodiment shown in FIG. 5A and FIG. 5B lies in that the network function configuration information of the UDM network element 2 in step S604 does not include the home location identifier of the UDM network element 2.

S605 is the same as step S506. For related descriptions, refer to the embodiment shown in FIG. 5A and FIG. 5B. Details are not described herein again.

S606: The UDM network element 2 obtains subscription information of the terminal device.

When a service package to which the terminal device subscribes is a preset service package, the subscription information of the terminal device includes a home location identifier of the terminal device. Correspondingly, when the service package to which the terminal device subscribes is not the preset service package, the subscription information of the terminal device does not include the home location identifier of the terminal device.

S607: The UDM network element 2 sends the subscription information of the terminal device to the AMF network element 1, and the AMF network element 1 receives the subscription information of the terminal device from the UDM network element 2.

Optionally, the UDM network element 2 may include the subscription information of the terminal device in the SMF selection subscription information, and send the SMF selection subscription information to the AMF network element 1, so that the AMF network element 1 may obtain the subscription information of the terminal device by receiving the SMF selection subscription information from the UDM network element 2. This is not specifically limited in this embodiment of this application.

S608: The AMF network element 1 determines whether the subscription information of the terminal device includes the home location identifier of the terminal device.

It may be understood that when the AMF network element 1 determines that the subscription information of the terminal device includes the home location identifier of the terminal device, it indicates that the service package to which the terminal device subscribes is the preset service package. Correspondingly, when the AMF network element 1 determines that the subscription information of the terminal device does not include the home location identifier of the terminal device, it indicates that the service package to which the terminal device subscribes is not the preset service package.

In an optional implementation, when the AMF network element 1 determines that the subscription information of the terminal device includes the home location identifier of the terminal device, the session management network element discovery method provided in this embodiment of this application further includes the following steps S609a to S611a shown in FIG. 6A and FIG. 6B.

S609a: The AMF network element 1 sends an SMF discovery request message to the NRF network element, and the NRF network element receives the SMF discovery request message from the AMF network element 1.

The SMF discovery request message carries the home location identifier of the terminal device.

S610a: The NRF network element determines the SMF network element 2 based on the home location identifier of the terminal device.

The SMF discovery request message further carries a standard SMF discovery parameter, for example, a DNN, S-NSSAI, or a TAI. The NRF network element uses the standard SMF discovery parameter as an optional parameter, and uses the home location identifier of the terminal device as a mandatory parameter, to determine a corresponding SMF network element for the terminal device through matching. This is not specifically limited in this embodiment of this application.

S611a: The NRF network element sends an identifier of the SMF network element 2 to the AMF network element 1, and the AMF network element 1 receives the identifier of the SMF network element 2 from the NRF network element.

Further, the AMF network element 1 may initiate a session establishment procedure through the SMF network element 2 based on the received identifier of the SMF network element 2, to provide a service for the terminal device.

Alternatively, in another optional implementation, when the AMF network element 1 determines that the subscription information of the terminal device does not include the home location identifier of the terminal device, the session management network element discovery method provided in this embodiment of this application further includes the following steps S609b to S611b shown in FIG. 6A and FIG. 6B.

S609b to S611b are the same as steps S510b to S512b. For related descriptions, refer to the embodiment shown in FIG. 5A and FIG. 5B. Details are not described herein again.

In this embodiment of this application, the UDM network element 2 may obtain the subscription information of the terminal device, and send the subscription information of the terminal device to the AMF network element 1. When the service package to which the terminal device subscribes is the preset service package, the subscription information of the terminal device includes the home location identifier of the terminal device. Therefore, when the AMF network element 1 determines that the received subscription information of the terminal device includes the home location identifier of the terminal device, it indicates that the service package to which the terminal device subscribes is the preset service package. In this case, the AMF network element 1 may send the home location identifier of the terminal device to the NRF network element. Further, when receiving the home location identifier of the terminal device from the AMF network element 1, the NRF network element may determine the corresponding SMF network element for the terminal device through matching based on the home location identifier of the terminal device, and send an identifier of the SMF network element to the AMF network element 1, so that different session management network element discovery policies are provided for terminal devices that subscribe to different service packages with a same DNN. In other words, in this embodiment of this application, different session management network element discovery policies can be provided for the terminal device based on different service packages to which the terminal device subscribes. This avoids a current-technology problem that terminal devices that subscribe to different service packages with a same DNN use a same SMF network element discovery policy during session activation.

The actions of the NRF network element, the actions of the UDM network element 2, or the actions of the SMF network element 2 in the foregoing steps S601 to S611a or steps S601 to S611b may be performed by the processor 401 in the communication device 400 shown in FIG. 4 by invoking the application program code stored in the memory 403. This is not limited in this embodiment.

It may be understood that in the foregoing embodiments, a method and/or step implemented by the network repository function network element may alternatively be implemented by a component that can be used in the network repository function network element, a method and/or step implemented by the first unified data management network element may alternatively be implemented by a component that can be used in the first unified data management network element, and a method and/or step implemented by the mobility management network element may alternatively be implemented by a component that can be used in the mobility management network element.

The foregoing mainly describes the solutions provided in embodiments of this application from a perspective of interaction between network elements. Correspondingly, an embodiment of this application further provides a communication apparatus. The communication apparatus may be the network repository function network element in the method embodiments, an apparatus including the network repository function network element, or a component that can be used in the network repository function network element. Alternatively, the communication apparatus may be the first unified data management network element in the method embodiments, an apparatus including the first unified data management network element, or a component that can be used in the first unified data management network element. Alternatively, the communication apparatus may be the mobility management network element in the method embodiments, an apparatus including the mobility management network element, or a component that can be used in the mobility management network element. It may be understood that, to implement the foregoing functions, the communication apparatus includes a corresponding hardware structure and/or software module for performing the functions. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that such an implementation goes beyond the scope of this application.

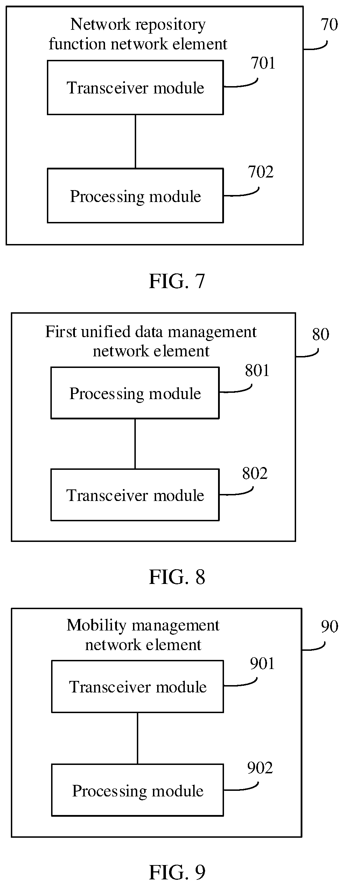

For example, the communication apparatus is the network repository function network element in the method embodiments. FIG. 7 is a schematic diagram of a structure of a network repository function network element 70. The network repository function network element 70 includes a transceiver module 701 and a processing module 702. The transceiver module 701 may also be referred to as a transceiver unit, and is configured to implement a transceiver function. For example, the transceiver module 701 may be a transceiver circuit, a transceiver, a transceiver, or a communication interface.

The transceiver module 701 is configured to receive a first identifier from a mobility management network element, where the first identifier is for identifying a home location of a terminal device. The processing module 702 is configured to determine a first session management network element based on the first identifier, where a home location identifier of the first session management network element is the same as the first identifier. The transceiver module 701 is further configured to send an identifier of the first session management network element to the mobility management network element.

Optionally, the first identifier is a home location identifier of a first unified data management network element, and the first unified data management network element is a unified data management network element to which the terminal device subscribes; or the first identifier is a home location identifier of the terminal device.

Optionally, the first identifier is the home location identifier of the first unified data management network element, and the transceiver module 701 is further configured to send the home location identifier of the first unified data management network element to the mobility management network element.

Optionally, that the transceiver module 701 is configured to send the home location identifier of the first unified data management network element to the mobility management network element includes: The transceiver module 701 is configured to send network function configuration information of the first unified data management network element to the mobility management network element, where the network function configuration information includes the home location identifier of the first unified data management network element.

Optionally, the transceiver module 701 is further configured to receive a first message from the first unified data management network element, where the first message carries the home location identifier of the first unified data management network element, and the first message is for registering the first unified data management network element with the network repository function network element 70.

Optionally, the transceiver module 701 is further configured to receive a second message from the first session management network element, where the second message carries the home location identifier of the first session management network element, and the second message is for registering the first session management network element with the network repository function network element 70.

Optionally, the home location identifier of the first session management network element is included in network function configuration information of the first session management network element.

All related content of the steps in the method embodiments may be cited in function descriptions of corresponding function modules. Details are not described herein again.

In this embodiment, the network repository function network element 70 is presented in a form of function modules obtained through division in an integrated manner. The "module" herein may be a specific ASIC, a circuit, a processor executing one or more software or firmware programs, a memory, an integrated logic circuit, and/or another component that can provide the foregoing functions. In a simple embodiment, a person skilled in the art may figure out that the network repository function network element 70 may be in a form of the communication apparatus 40 shown in FIG. 4.

For example, the processor 401 in the communication apparatus 40 shown in FIG. 4 may invoke the computer-executable instructions stored in the memory 403, to enable the communication apparatus 40 to perform the session management network element discovery method in the method embodiments.

Specifically, functions/implementation processes of the processing module 702 and the transceiver module 701 in FIG. 7 may be implemented by the processor 401 in the communication apparatus 40 shown in FIG. 4 by invoking the computer-executable instructions stored in the memory 403. Alternatively, a function/an implementation process of the processing module 702 in FIG. 7 may be implemented by the processor 401 in the communication apparatus 40 shown in FIG. 4 by invoking the computer-executable instructions stored in the memory 403; a function/an implementation process of the transceiver module 701 in FIG. 7 may be implemented by using the communication interface 404 in the communication apparatus 40 shown in FIG. 4.

Because the network repository function network element 70 provided in this embodiment may perform the foregoing session management network element discovery methods, for technical effects that can be achieved by the network repository function network element 70, refer to the method embodiments. Details are not described herein again.

Alternatively, for example, the communication apparatus is the first unified data management network element in the method embodiments. FIG. 8 is a schematic diagram of a structure of a first unified data management network element 80. The first unified data management network element 80 includes a processing module 801 and a transceiver module 802. The transceiver module 802 may also be referred to as a transceiver unit, and is configured to implement a transceiver function. For example, the transceiver module 802 may be a transceiver circuit, a transceiver, a transceiver, or a communication interface.

In an optional implementation, the processing module 801 is configured to obtain subscription information of a terminal device, where the subscription information is for determining whether a service package to which the terminal device subscribes is a preset service package. The transceiver module 802 is configured to send the subscription information to a mobility management network element.

Further, optionally, the transceiver module 802 is further configured to send a first message to a network repository function network element, where the first message carries a home location identifier of the first unified data management network element, and the first message is for registering the first unified data management network element with the network repository function network element.

Alternatively, in another optional implementation, the processing module 801 is configured to obtain subscription information of a terminal device, where when a service package to which the terminal device subscribes is a preset service package, the subscription information includes a home location identifier of the terminal device, where the home location identifier of the terminal device is for determining a first session management network element, and the first session management network element and the terminal device have a same home location identifier. The transceiver module 802 is further configured to send the subscription information to a mobility management network element.

All related content of the steps in the method embodiments may be cited in function descriptions of corresponding function modules. Details are not described herein again.

In this embodiment, the first unified data management network element 80 is presented in a form of function modules obtained through division in an integrated manner. The "module" herein may be a specific ASIC, a circuit, a processor executing one or more software or firmware programs, a memory, an integrated logic circuit, and/or another component that can provide the foregoing functions. In a simple embodiment, a person skilled in the art may figure out that the first unified data management network element 80 may be in a form of the communication apparatus 40 shown in FIG. 4.

For example, the processor 401 in the communication apparatus 40 shown in FIG. 4 may invoke the computer-executable instructions stored in the memory 403, to enable the communication apparatus 40 to perform the session management network element discovery method in the method embodiments.

Specifically, functions/implementation processes of the processing module 801 and the transceiver module 802 in FIG. 8 may be implemented by the processor 401 in the communication apparatus 40 shown in FIG. 4 by invoking the computer-executable instructions stored in the memory 403. Alternatively, a function/an implementation process of the processing module 801 in FIG. 8 may be implemented by the processor 401 in the communication apparatus 40 shown in FIG. 4 by invoking the computer-executable instructions stored in the memory 403; a function/an implementation process of the transceiver module 802 in FIG. 8 may be implemented by using the communication interface 404 in the communication apparatus 40 shown in FIG. 4.

Because the first unified data management network element 80 provided in this embodiment may perform the foregoing session management network element discovery methods, for technical effects that can be achieved by the first unified data management network element 80, refer to the method embodiments. Details are not described herein again.

Alternatively, for example, the communication apparatus is the mobility management network element in the method embodiments. FIG. 9 is a schematic diagram of a structure of a mobility management network element 90. The mobility management network element 90 includes a transceiver module 901 and a processing module 902. The transceiver module 901 may also be referred to as a transceiver unit, and is configured to implement a transceiver function. For example, the transceiver module 901 may be a transceiver circuit, a transceiver, a transceiver, or a communication interface.

In an optional implementation, the transceiver module 901 is configured to receive a home location identifier of a first unified data management network element from a network repository function network element. The transceiver module 901 is further configured to receive subscription information of a terminal device from the first unified data management network element. The processing module 902 is configured to determine, based on the subscription information, that a service package to which the terminal device subscribes is a preset service package. The transceiver module 901 is further configured to send the home location identifier of the first unified data management network element to the network repository function network element, where the home location identifier of the first unified data management network element is for determining a first session management network element, and the first session management network element and the first unified data management network element have a same home location identifier. The transceiver module 901 is further configured to receive an identifier of the first session management network element from the network repository function network element.

Further, optionally, that the transceiver module 901 is configured to receive a home location identifier of a first unified data management network element from a network repository function network element includes: The transceiver module 901 is configured to receive network function configuration information of the first unified data management network element from the network repository function network element, where the network function configuration information includes the home location identifier of the first unified data management network element.

Alternatively, in another optional implementation, the transceiver module 901 is configured to receive subscription information of a terminal device from a first unified data management network element, where the first unified data management network element is a data management network element to which the terminal device subscribes. The processing module 902 is configured to determine that the subscription information includes a home location identifier of the terminal device. The transceiver module 901 is further configured to send the home location identifier of the terminal device to a network repository function network element, where the home location identifier of the terminal device is for determining a first session management network element, and the first session management network element and the unified data management network element have a same home location identifier. The transceiver module 901 is further configured to receive an identifier of the first session management network element from the network repository function network element.

All related content of the steps in the method embodiments may be cited in function descriptions of corresponding function modules. Details are not described herein again.

In this embodiment, the mobility management network element 90 is presented in a form of function modules obtained through division in an integrated manner. The "module" herein may be a specific ASIC, a circuit, a processor executing one or more software or firmware programs, a memory, an integrated logic circuit, and/or another component that can provide the foregoing functions. In a simple embodiment, a person skilled in the art may figure out that the mobility management network element 90 may be in a form of the communication apparatus 40 shown in FIG. 4.

For example, the processor 401 in the communication apparatus 40 shown in FIG. 4 may invoke the computer-executable instructions stored in the memory 403, to enable the communication apparatus 40 to perform the session management network element discovery method in the method embodiments.

Specifically, functions/implementation processes of the processing module 902 and the transceiver module 901 in FIG. 9 may be implemented by the processor 401 in the communication apparatus 40 shown in FIG. 4 by invoking the computer-executable instructions stored in the memory 403. Alternatively, a function/an implementation process of the processing module 902 in FIG. 9 may be implemented by the processor 401 in the communication apparatus 40 shown in FIG. 4 by invoking the computer-executable instructions stored in the memory 403; a function/an implementation process of the transceiver module 901 in FIG. 9 may be implemented by using the communication interface 404 in the communication apparatus 40 shown in FIG. 4.

Because the mobility management network element 90 provided in this embodiment may perform the foregoing session management network element discovery methods, for technical effects that can be achieved by the mobility management network element 90, refer to the method embodiments. Details are not described herein again.

It should be noted that one or more of the foregoing modules or units may be implemented by using software, hardware, or a combination thereof. When any one of the foregoing modules or units is implemented by using software, the software exists in a form of computer program instructions, and is stored in a memory. A processor may be configured to execute the program instructions to implement the foregoing method procedures. The processor may be built into an SoC (system-on-a-chip) or an ASIC, or may be an independent semiconductor chip. In addition to a core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete component, and the hardware may run necessary software or does not depend on software to perform the foregoing method procedures.

Optionally, an embodiment of this application further provides a communication apparatus (where for example, the communication apparatus may be a chip or a chip system). The communication apparatus includes a processor, configured to implement the method according to any one of the foregoing method embodiments. In a possible design, the communication apparatus further includes a memory. The memory is configured to store necessary program instructions and data. The processor may invoke program code stored in the memory, to instruct the communication apparatus to perform the method according to any one of the foregoing method embodiments. Certainly, the memory may alternatively not be in the communication apparatus. When the communication apparatus is a chip system, the communication apparatus may include a chip, or may include a chip and another discrete component. This is not specifically limited in this embodiment of this application.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of'. A single processor or another unit may implement several functions listed in the claims. Some measures are recorded in dependent claims that are different from each other, but this does not mean that these measures cannot be combined to produce a better effect.

Although this application is described with reference to specific features and embodiments thereof, clearly, various modifications and combinations may be made to them without departing from the spirit and scope of this application. Correspondingly, this specification and the accompanying drawings are merely example descriptions of this application defined by the appended claims, and are considered as any of or all modifications, variations, combinations or equivalents that cover the scope of this application. Clearly, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A session management network element discovery method, comprising:
receiving, by a network repository function network element, a first identifier from a mobility management network element, wherein the first identifier is for identifying a home location of a terminal device;
determining, by the network repository function network element, a first session management network element based on the first identifier, wherein a home location identifier of the first session management network element is the same as the first identifier; and
sending, by the network repository function network element, an identifier of the first session management network element to the mobility management network element.

2. The method according to claim 1, wherein the first identifier is a home location identifier of a first unified data management network element, and the first unified data management network element is a unified data management network element to which the terminal device subscribes; or
the first identifier is a home location identifier of the terminal device.

3. The method according to claim 2, wherein the first identifier is the home location identifier of the first unified data management network element, and the method further comprises:
sending, by the network repository function network element, the home location identifier of the first unified data management network element to the mobility management network element.

4. The method according to claim 3, wherein the sending, by the network repository function network element, the home location identifier of the first unified data management network element to the mobility management network element comprises:
sending, by the network repository function network element, network function configuration information of the first unified data management network element to the mobility management network element, wherein the network function configuration information comprises the home location identifier of the first unified data management network element.

5. The method according to claim 3 or 4, wherein the method further comprises:
receiving, by the network repository function network element, a first message from the first unified data management network element, wherein the first message carries the home location identifier of the first unified data management network element, and the first message is for registering the first unified data management network element with the network repository function network element.

6. The method according to any one of claims 1 to 5, wherein the method further comprises:
receiving, by the network repository function network element, a second message from the first session management network element, wherein the second message carries the home location identifier of the first session management network element, and the second message is for registering the first session management network element with the network repository function network element.

7. The method according to any one of claims 1 to 6, wherein the home location identifier of the first session management network element is comprised in network function configuration information of the first session management network element.

8. A session management network element discovery method, comprising:
obtaining, by a first unified data management network element, subscription information of a terminal device, wherein the subscription information is for determining whether a service package to which the terminal device subscribes is a preset service package, and the first unified data management network element is a unified data management network element to which the terminal device subscribes; and
sending, by the first unified data management network element, the subscription information to a mobility management network element.

9. The method according to claim 8, wherein the method further comprises:
sending, by the first unified data management network element, a first message to a network repository function network element, wherein the first message carries a home location identifier of the first unified data management network element, and the first message is for registering the first unified data management network element with the network repository function network element.

10. A session management network element discovery method, comprising:
receiving, by a mobility management network element, a home location identifier of a first unified data management network element from a network repository function network element, wherein the first unified data management network element is a unified data management network element to which a terminal device subscribes;
receiving, by the mobility management network element, subscription information of the terminal device from the first unified data management network element;
when the mobility management network element determines, based on the subscription information, that a service package to which the terminal device subscribes is a preset service package, sending, by the mobility management network element, the home location identifier of the first unified data management network element to the network repository function network element, wherein the home location identifier of the first unified data management network element is for determining a first session management network element, and the first session management network element and the first unified data management network element have a same home location identifier; and
receiving, by the mobility management network element, an identifier of the first session management network element from the network repository function network element.

11. The method according to claim 10, wherein the receiving, by a mobility management network element, a home location identifier of a first unified data management network element from a network repository function network element comprises:
receiving, by the mobility management network element, network function configuration information of the first unified data management network element from the network repository function network element, wherein the network function configuration information comprises the home location identifier of the first unified data management network element.

12. A session management network element discovery method, comprising:
obtaining, by a first unified data management network element, subscription information of a terminal device, wherein the first unified data management network element is a data management network element to which the terminal device subscribes; and when a service package to which the terminal device subscribes is a preset service package, the subscription information comprises a home location identifier of the terminal device, wherein the home location identifier of the terminal device is for determining a first session management network element, and the first session management network element and the terminal device have a same home location identifier; and
sending, by the first unified data management network element, the subscription information to a mobility management network element.

13. A session management network element discovery method, comprising:
receiving, by a mobility management network element, subscription information of a terminal device from a first unified data management network element, wherein the first unified data management network element is a data management network element to which the terminal device subscribes;
when the mobility management network element determines that the subscription information comprises a home location identifier of the terminal device, sending, by the mobility management network element, the home location identifier of the terminal device to a network repository function network element, wherein the home location identifier of the terminal device is for determining a first session management network element, and the first session management network element and the unified data management network element have a same home location identifier; and
receiving, by the mobility management network element, an identifier of the first session management network element from the network repository function network element.

14. A communication apparatus, comprising a transceiver module and a processing module, wherein
the transceiver module is configured to receive a first identifier from a mobility management network element, wherein the first identifier is for identifying a home location of a terminal device;
the processing module is configured to determine a first session management network element based on the first identifier, wherein a home location identifier of the first session management network element is the same as the first identifier; and
the transceiver module is further configured to send an identifier of the first session management network element to the mobility management network element.

15. The communication apparatus according to claim 14, wherein the first identifier is a home location identifier of a first unified data management network element, and the first unified data management network element is a unified data management network element to which the terminal device subscribes; or
the first identifier is a home location identifier of the terminal device.

16. The communication apparatus according to claim 15, wherein the first identifier is the home location identifier of the first unified data management network element; and
the transceiver module is further configured to send the home location identifier of the first unified data management network element to the mobility management network element.

17. The communication apparatus according to claim 16, wherein that the transceiver module is configured to send the home location identifier of the first unified data management network element to the mobility management network element comprises:
the transceiver module is configured to send network function configuration information of the first unified data management network element to the mobility management network element, wherein the network function configuration information comprises the home location identifier of the first unified data management network element.

18. The communication apparatus according to claim 16 or 17, wherein the transceiver module is further configured to receive a first message from the first unified data management network element, wherein the first message carries the home location identifier of the first unified data management network element, and the first message is for registering the first unified data management network element with the communication apparatus.

19. The communication apparatus according to any one of claims 14 to 18, wherein the transceiver module is further configured to receive a second message from the first session management network element, wherein the second message carries the home location identifier of the first session management network element, and the second message is for registering the first session management network element with the communication apparatus.

20. The communication apparatus according to any one of claims 14 to 19, wherein the home location identifier of the first session management network element is comprised in network function configuration information of the first session management network element.

21. A communication apparatus, wherein the communication apparatus is a unified data management network element to which a terminal device subscribes, and comprises a processing module and a transceiver module, wherein
the processing module is configured to obtain subscription information of the terminal device, wherein the subscription information is for determining whether a service package to which the terminal device subscribes is a preset service package; and
the transceiver module is configured to send the subscription information to a mobility management network element.

22. The communication apparatus according to claim 21, wherein the transceiver module is further configured to send a first message to a network repository function network element, wherein the first message carries a home location identifier of the communication apparatus, and the first message is for registering the communication apparatus with the network repository function network element.

23. A communication apparatus, comprising a transceiver module and a processing module, wherein
the transceiver module is configured to receive a home location identifier of a first unified data management network element from a network repository function network element, wherein the first unified data management network element is a unified data management network element to which a terminal device subscribes;
the transceiver module is further configured to receive subscription information of the terminal device from the first unified data management network element;
the processing module is configured to determine, based on the subscription information, that a service package to which the terminal device subscribes is a preset service package;
the transceiver module is further configured to send the home location identifier of the first unified data management network element to the network repository function network element, wherein the home location identifier of the first unified data management network element is for determining a first session management network element, and the first session management network element and the first unified data management network element have a same home location identifier; and
the transceiver module is further configured to receive an identifier of the first session management network element from the network repository function network element.

24. The communication apparatus according to claim 23, wherein that the transceiver module is configured to receive a home location identifier of a first unified data management network element from a network repository function network element comprises:
the transceiver module is configured to receive network function configuration information of the first unified data management network element from the network repository function network element, wherein the network function configuration information comprises the home location identifier of the first unified data management network element.

25. A communication apparatus, wherein the communication apparatus is a data management network element to which a terminal device subscribes, and comprises a processing module and a transceiver module, wherein
the processing module is configured to obtain subscription information of the terminal device, wherein when a service package to which the terminal device subscribes is a preset service package, the subscription information comprises a home location identifier of the terminal device, wherein the home location identifier of the terminal device is for determining a first session management network element, and the first session management network element and the terminal device have a same home location identifier; and
the transceiver module is configured to send the subscription information to a mobility management network element.

26. A communication apparatus, comprising a transceiver module and a processing module, wherein
the transceiver module is configured to receive subscription information of a terminal device from a first unified data management network element, wherein the first unified data management network element is a data management network element to which the terminal device subscribes;
the processing module is configured to determine that the subscription information comprises a home location identifier of the terminal device;
the transceiver module is further configured to send the home location identifier of the terminal device to a network repository function network element, wherein the home location identifier of the terminal device is for determining a first session management network element, and the first session management network element and the unified data management network element have a same home location identifier; and
the transceiver module is further configured to receive an identifier of the first session management network element from the network repository function network element.

27. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor executes code instructions to implement the method according to any one of claims 1 to 7.

28. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor executes code instructions to implement the method according to claim 8 or 9.

29. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor executes code instructions to implement the method according to claim 10 or 11.

30. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor executes code instructions to implement the method according to claim 12.

31. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor executes code instructions to implement the method according to claim 13.

32. A communication apparatus, configured to perform the method according to any one of claims 1 to 7.

33. A communication apparatus, configured to perform the method according to claim 8 or 9.

34. A communication apparatus, configured to perform the method according to claim 10 or 11.

35. A communication apparatus, configured to perform the method according to claim 12.

36. A communication apparatus, configured to perform the method according to claim 13.

37. A computer-readable storage medium, wherein the computer-readable storage medium stores instructions; and when the instructions are run on a computer, the computer is enabled to perform the method according to any one of claims 1 to 13.

38. A computer program product comprising instructions, wherein when the computer program product runs on a computer, the computer is enabled to perform the method according to any one of claims 1 to 13.

39. A communication system, comprising a network repository function network element that performs the method according to any one of claims 1 to 7 and a mobility management network element that performs the method according to claim 10 or 11.

40. The communication system according to claim 39, further comprising a first unified data management network element that performs the method according to claim 8 or 9.

41. A communication system, comprising a first unified data management network element that performs the method according to claim 12 and a mobility management network element that performs the method according to claim 13.
